# EUROPÄISCHE PATENTSCHRIFT

(11) **EP 3 697 027 B1**
(45) Veröffentlichungstag und Bekanntmachung des Hinweises auf die Patenterteilung: **10.08.2022**
(21) Anmeldenummer: 20153190.2
(22) Anmeldetag: 22.01.2020
(51) Int. Cl.: H04L 12/28, H04L 69/24, H04L 67/125, H04L 67/025

(54) **STEUERN EINES HAUSHALTSGERÄTS DURCH EINE EXTERNE STELLE**
CONTROL OF A HOUSEHOLD APPLIANCE THROUGH AN EXTERNAL LOCATION
COMMANDE D'UN APPAREIL ÉLECTROMÉNAGER À L'AIDE D'UN POSTE EXTERNE

(30) Priorität: 15.02.2019 DE 102019202085
(43) Veröffentlichungstag der Anmeldung: 19.08.2020
(73) Patentinhaber: BSH Hausgeräte GmbH, 81739 München (DE)
(72) Erfinder: Richer, Thomas, 81541 München (DE)

(56) Entgegenhaltungen:
- EP-A1- 2 663 025
- WO-A1-2006/135758
- DE-A1-102011 007 427

## Beschreibung

Die Erfindung betrifft die Steuerung eines Haushaltsgeräts. Insbesondere betrifft die Erfindung die Steuerung des Haushaltsgeräts von einer externen Stelle aus.

Ein Haushaltsgerät umfasst eine Schnittstelle zur Datenverbindung mit einer externen Stelle. Das Haushaltsgerät ist in einem Haushalt aufgestellt, wo ein zentraler Router bereitsteht, über den eine solche Datenverbindung über das Internet aufgebaut werden kann. Allerdings ist es üblicherweise nicht ohne weiteres möglich, eine Verbindung von der externen Stelle zum Haushaltsgerät aufzubauen. Häufig verhindern Sicherheitseinstellungen, dass ein Gerät innerhalb des Haushalts einen Dienst für einen Client im Netzwerk anbietet. Meistens ist auch eine Adresse des Routers im Internet nicht von Dauer.

Um das Übermitteln einer Nachricht von der externen Stelle an das Haushaltsgerät zu ermöglichen, öffnet dieses eine Kommunikationsverbindung zur externen Stelle und hält die Verbindung über eine vorbestimmte Zeit aufrecht. Bricht die Verbindung ab, so kann sie erneut vom Haushaltsgerät aufgebaut werden. Seitens der externen Stelle muss in diesem Fall für jedes zu steuernde Haushaltsgerät eine geöffnete Kommunikationsverbindung bestehen. Die hierfür erforderlichen Ressourcen in Form von Rechenkapazität, Speicher oder Netzwerk-Bandbreite können erheblich sein, wenn eine Vielzahl Haushaltsgeräte gesteuert werden sollen.

KR 2002 0 087 545 A schlägt vor, mehrere Haushaltsgeräte in einem Haushalt miteinander zu verbinden und dynamische Netzwerkinformationen, die jeweils zum Kontaktieren eines des Haushaltsgeräte erforderlich sind, an einer externen Stelle zu aktualisieren.

Aus der EP 2 663 025 A1 ist ein vernetzter Hausgeräteverbund vorbekannt, bei dem die Hausgeräte unterschiedliche Kommunikationsfähigkeiten besitzen. Dabei verwendet eine erste Gruppe von Hausgeräten ein erstes Kommunikationsprotokoll und eine zweite Gruppe von Hausgeräten ein vom ersten Kommunikationsprotokoll verschiedenes zweites Kommun ikationsprotokoll.

Eine der vorliegenden Erfindung zu Grunde liegende Aufgabe besteht in der Angabe einer verbesserten Technik, um mit verringertem Aufwand von einer externen Stelle aus mehrere Haushaltsgeräte zu steuern. Die Erfindung löst diese Aufgabe mittels der Gegenstände der unabhängigen Ansprüche. Unteransprüche geben bevorzugte Ausführungsformen wieder.

Ein Verfahren zum Steuern eines ersten und eines zweiten Haushaltsgeräts in einem Haushalt durch eine externe Stelle umfasst Schritte des Bereitstellens von zwei Haushaltsgeräten; des Herstellens einer ersten Kommunikationsverbindung zwischen den beiden Haushaltsgeräten; des Aushandelns zwischen den beiden Haushaltsgeräten, welches als erstes und welches als zweites Haushaltsgerät handelt; des Herstellens einer zweiten Kommunikationsverbindung vom zweiten Haushaltsgerät zur externen Stelle; des Erfassens einer Nachricht durch das zweite Haushaltsgerät, wobei die Nachricht von der externen Stelle an eines der Haushaltsgeräte gerichtet ist; und des Weiterleitens der Nachricht an das erste Haushaltsgerät, falls die Nachricht an das erste Haushaltsgerät gerichtet ist. Bevorzugt wird die Nachricht über die zweite Kommunikationsverbindung von der externen Stelle an das zweite Haushaltsgerät, und über die erste Kommunikationsverbindung vom zweiten Haushaltsgerät an das erste Haushaltsgerät übermittelt.

Erfindungsgemäß kann das grundlegende Schema, dass eine Verbindung zur externen Stelle von einem Haushaltsgerät aufgebaut werden muss, beibehalten werden. Eine Netzwerksicherheit kann unverändert hoch sein und die Technik kann an einem üblichen Router in einem Haushalt eingesetzt werden. Gleichzeitig kann die Anzahl der seitens der externen Stelle offen gehaltenen Kommunikationskanäle halbiert werden, sodass Ressourcen eingespart werden können.

In einer besonders bevorzugten Ausführungsform sind in dem Haushalt mehrere erste Haushaltsgeräte angebracht, die sich bezüglich der Kommunikation mit der externen Stelle im Wesentlichen gleich verhalten. Dadurch kann die Anzahl offener Kommunikationsverbindungen seitens der externen Stelle weiter reduziert werden. Sind beispielsweise vier erste Haushaltsgeräte und ein zweites Haushaltsgerät in einem Haushalt vorgesehen, so kann die Anzahl der offenen Kommunikationskanäle gegenüber einer konventionellen Technik auf 20% reduziert sein; bei neun ersten und einem zweiten Haushaltsgerät auf 10%.

Die zweite Kommunikationsverbindung ist bevorzugt eine paketvermittelte Verbindung, die auf einer höheren Schicht als virtuelle Leitung etabliert und aufrechterhalten werden kann. Beispielsweise kann eine TCP/IP-Verbindung hierfür verwendet werden. Informationen können mittels eines beliebigen höheren Protokolls übermittelt werden, beispielsweise HTTP.

Das zweite Haushaltsgerät kann auch periodisch Nachrichten von der externen Stelle abfragen. Eine Häufigkeit des Abfragens kann durch das zweite Haushaltsgerät bestimmt werden, beispielsweise in Abhängigkeit einer Situation im Haushalt. Sind beispielsweise Personen anwesend, so kann mit höherer Frequenz abgefragt werden als wenn keine Personen anwesend sind. Die Abfragefrequenz kann auch von einer Aktivität der anwesenden Personen abhängig sein. Die Aktivität kann anhand eines Nutzungsgrads der Haushaltsgeräte bestimmt werden.

Das erste Haushaltsgerät kann in Antwort auf eine empfangene Nachricht eine dritte Kommunikationsverbindung zur externen Stelle herstellen. Die dritte Kommunikationsverbindung kann beispielsweise zur Übermittlung einer Antwort an die externe Stelle verwendet werden.

Die dritte Kommunikationsverbindung verläuft bevorzugt nicht über das zweite Haushaltsgerät, sondern direkt. Beispielsweise können das erste und das zweite Haushaltsgerät jeweils mit einem Router kommunizieren, der Informationen zur und von der externen Stelle weiterleitet. Die dritte Kommunikationsverbindung kann unabhängig vom zweiten Haushaltsgerät sein, so dass dieses weitere Informationen nicht weiterleiten muss. Ressourcen des ersten Haushaltsgeräts können eingespart werden. Eine Kommunikationssicherheit des zweiten Haushaltsgeräts kann verbessert sein.

Eine Nachricht, die über die erste Kommunikationsverbindung an das erste Haushaltsgerät weitergeleitet wurde, kann eine Aufforderung zum Aufbauen der dritten Kommunikationsverbindung betreffen. In diesem Fall kann das Verfahren einen Schritt des Beziehens einer Steuerinformation durch das erste Haushaltsgerät von der externen Stelle umfassen. Dadurch ist seitens des zweiten Haushaltsgeräts nur bekannt, dass eine Kommunikation zwischen der externen Stelle und dem ersten Haushaltsgerät gewünscht ist, ein Grund oder ein Inhalt der Kommunikation hingegen sind nicht bekannt. Ein Gegenstand der Kommunikation zwischen der externen Stelle und dem ersten Haushaltsgerät, insbesondere die Steuerinformation, kann direkt übermittelt werden.

Eine Gerätefunktion des ersten Haushaltsgeräts kann in Abhängigkeit einer empfangenen Nachricht gesteuert werden. Die Nachricht kann hierbei die Steuerinformation umfassen. Die Steuerung kann beispielsweise einen Übergang des Haushaltsgeräts von einem Ruhezustand in einen Bereitschaftszustand oder einen Arbeitszustand betreffen, oder einen Betriebsparameter des Geräts anfordern oder setzen.

Bevorzugt wird eine Antwort des ersten Haushaltsgeräts auf eine empfangene Nachricht an die externe Stelle übermittelt. Man spricht hierbei auch von einer quittierten Übertragung. Die externe Stelle kann dadurch verbessert Kenntnis von einem Zustand des ersten Haushaltsgeräts haben. Sollte das erste Haushaltsgerät die Nachricht empfangen, aber einen darin enthaltenen Steuerbefehl nicht ausführen können, so kann sie diesen Umstand oder einen Grund dafür über die Antwort der externen Stelle mitteilen.

Die Nachricht an der externen Stelle kann auf der Basis einer Anforderung durch ein weiteres Gerät bestimmt sein. Beispielsweise kann ein Benutzer mittels eines netzwerkfähigen Geräts Kontakt mit der externen Stelle aufnehmen und eine Anforderung für eines der Haushaltsgeräte hinterlegen. Das Gerät kann insbesondere einen Personal Computer oder ein Smartphone umfassen. Alternativ kann eine Nachricht an eines der Haushaltsgeräte auch durch die externe Stelle bestimmt werden, beispielsweise in Abhängigkeit einer Nachricht eines anderen Haushaltsgeräts desselben Haushalts oder in Abhängigkeit einer anderen Bestimmung.

Im Haushalt können mehrere Haushaltsgeräte aushandeln, welches als erstes und welches als zweites Haushaltsgerät handeln soll. Als zweites Haushaltsgerät kann beispielsweise dasjenige bestimmt werden, das mit den meisten der anderen Haushaltsgeräte kommunizieren kann oder das von einem Benutzer dafür ausgewählt wurde.

Das Verfahren kann in Form eines Computerprogrammprodukts mit Programmcodemitteln vorliegen und von einer oder mehreren Verarbeitungseinrichtung von hierin beschriebenen Komponenten ausgeführt werden. Dazu kann die Verarbeitungseinrichtung einen programmierbaren Mikrocomputer oder Mikrocontroller umfassen. Das Computerprogrammprodukt kann auch auf einem computerlesbaren Datenträger abgespeichert sein. Merkmale oder Vorteile des Verfahrens können auf ein hierin beschriebenes Haushaltsgerät, eine hierin beschriebene Vorrichtung oder in hierin beschriebenes System übertragen werden oder umgekehrt.

Nach einem zweiten Aspekt der Erfindung ist ein Haushaltsgerät zur Steuerung eines weiteren Haushaltsgeräts dazu eingerichtet, eine erste Kommunikationsverbindung zum weiteren Haushaltsgerät herzustellen; mit dem weiteren Haushaltsgerät auszuhandeln, welches der beiden Haushaltsgeräte als erstes und welches als zweites Haushaltsgerät handelt; und sofern ausgehandelt wurde, dass das Haushaltsgerät als zweites Haushaltsgerät und das weitere Haushaltsgerät als erstes Haushaltsgerät handelt, eine zweite Kommunikationsverbindung zu einer externen Stelle herzustellen, eine Nachricht, die an eines der Haushaltsgeräte gerichtet ist, von der externen Stelle zu erfassen, und die Nachricht an das weitere Haushaltsgerät weiterzuleiten, falls die Nachricht an das weitere Haushaltsgerät gerichtet ist. Das erste und das zweite Haushaltsgerät sind hierbei bevorzugt im gleichen Haushalt angeordnet.

Nach einem dritten Aspekt der Erfindung ist eine Vorrichtung zur Steuerung eines ersten und eines zweiten Haushaltsgeräts, dazu eingerichtet, eine Nachricht, die an eines der Haushaltsgeräte gerichtet ist, zu speichern und die Nachricht in Antwort auf eine Abfrage eines der Haushaltsgeräte bereitzustellen. Die Vorrichtung kann einer hierin beschriebenen externen Stelle entsprechen.

Nach einem weiteren Aspekt der Erfindung umfasst ein System ein hierin beschriebenes Haushaltsgerät, eine hierin beschriebene externe Stelle und ein weiteres Haushaltsgerät, wobei das weitere Haushaltsgerät dazu eingerichtet ist, eine Nachricht vom Haushaltsgerät zu empfangen und eine Gerätefunktion in Abhängigkeit der Nachricht zu steuern.

Die Erfindung wird nun unter Bezug auf die beiliegenden Figuren genauer beschrieben, in denen:
- Figur 1: ein beispielhaftes System mit einem Haushalt und einer externen Stelle; und
- Figur 2: ein Ablaufdiagramm eines beispielhaften Verfahrens darstellt.

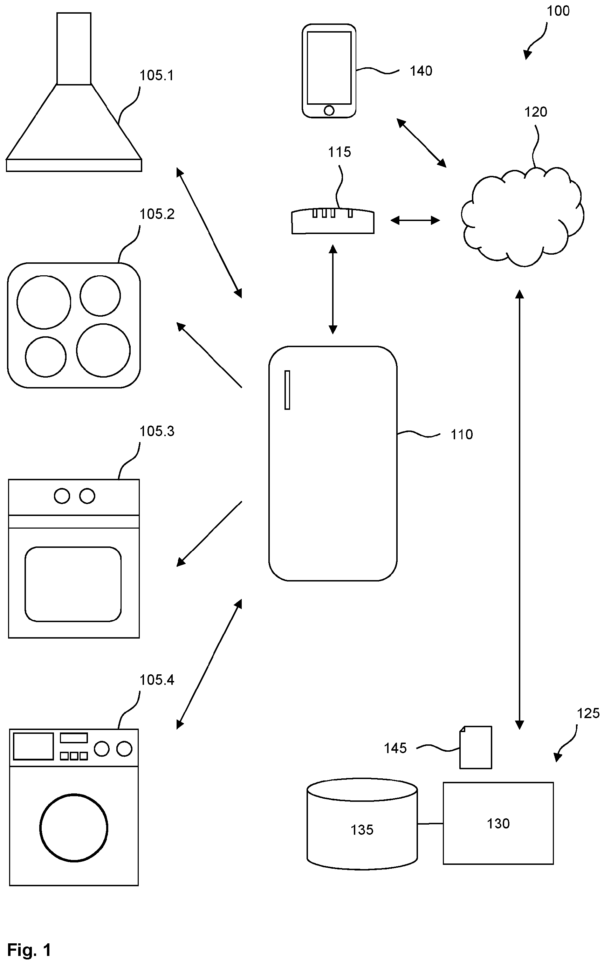

Figur 1 zeigt ein beispielhaftes System 100. Mehrere Haushaltsgeräte 105, 110 sind in einem gemeinsamen Haushalt angeordnet. Der Haushalt umfasst dabei üblicherweise einen Privathaushalt, meist in Form einer Wohnung oder eines Hauses, und ist bevorzugt wenigstens einer Person oder einer vorbestimmten Gruppe von Personen zugeordnet. Ein Haushaltsgerät 105, 110 kann praktisch jede Art von Gerät umfassen, die im Haushalt verwendet werden kann, insbesondere ein Küchengerät, einen Staubsauger, oder ein Heimwerkergerät. Optional kann eines der Haushaltsgeräte 105, 110 auch ein Unterhaltungsgerät wie einen Fernseher oder ein Radio umfassen.

Die Haushaltsgeräte 105, 110 können auch einem vorbestimmten Raum des Haushalts zugeordnet sein, etwa einer Küche oder einer Garage. Das System 100 umfasst wenigstens ein erstes Haushaltsgerät 105 und ein zweites Haushaltsgerät 110. Vorliegend sind beispielhaft mehrere erste Haushaltsgeräte 105 und ein zweites Haushaltsgerät 110 dargestellt, wobei die ersten Haushaltsgeräte 105 rein beispielhaft eine Dunstabzugshaube 105.1, ein Kochfeld 105.2, einen Backofen 105.3 und eine Waschmaschine 105.4. Das zweite Haushaltsgerät 110 ist beispielhaft als Kühlgerät dargestellt.

Im Haushalt ist bevorzugt ein Router 115 vorgesehen, der dazu eingerichtet ist, Informationen mit einem übergeordneten Netzwerk 120 wie dem Internet auszutauschen, mit dem auch eine externe Stelle 125 verbunden ist. Der Router 115 kann beispielsweise mittels (A)DSL, Breitbandkabel oder Lichtwellenleiter mit dem Netzwerk 120 verbunden sein. Innerhalb des Haushalts erfolgt eine Kommunikationsverbindung zu einem der Haushaltsgeräte 105, 110 üblicherweise drahtlos, beispielsweise per WLAN oder Bluetooth. In der Regel ist eine Netzwerkadresse, unter welcher der Router 115 im Netzwerk 120 erreicht werden kann, nicht bekannt und/oder nicht statisch. Insbesondere kann der Router 115 seine Netzwerkadresse mittels eines dynamischen Protokolls wie DHCP von einem Netzknoten des Netzwerks 120 beziehen. Der Router 115 kann eine Sicherheitsfunktion ("Firewall") umfassen, die dazu eingerichtet ist, das Aufbauen einer Kommunikationsverbindung zu verhindern, die vom Netzwerk 120 ausgeht und an eines der Haushaltsgeräte 105, 110 gerichtet ist. Eine Kommunikationsverbindung, die von einem der Haushaltsgeräte 105, 110 ausgeht und beispielsweise an die externe Stelle 125 gerichtet ist, kann hingegen vom Router 115 erlaubt sein.

Die externe Stelle 125 befindet sich bevorzugt außerhalb des Haushalts, in dem die Haushaltsgeräte 105, 110 angebracht sind, und ist weiter bevorzugt als Server oder als Dienst realisiert, insbesondere abstrahiert in einer Cloud. Die externe Stelle 125 umfasst üblicherweise eine Verarbeitungseinrichtung 130 und eine Speichervorrichtung 135 zur Ablage von Informationen und/oder Nachrichten. Die externe Stelle 125 ist bevorzugt dazu eingerichtet, mit einer Vielzahl Haushaltsgeräte 105, 110 des gleichen Haushalts kommunikativ verbunden zu sein. Es ist weiter bevorzugt, dass die externe Stelle 125 mit einer Vielzahl weiterer Haushaltsgeräte 105, 110 kommunikativ verbunden ist, die anderen Haushalten zugeordnet sind.

Ein persönliches Gerät 140 einer vorbestimmten Person kann ebenfalls über das Netzwerk 120 Informationen mit der externen Stelle 125 austauschen. Die Person ist bevorzugt wenigstens einem der Haushaltsgeräte 105, 110 des betrachteten Haushalts zugeordnet. Das Gerät 140 kann mobil sein und beispielsweise ein Smartphone, einen Tablet Computer oder ein Laptop umfassen. Es kann auch beispielsweise als Personal Computer ausgebildet und dazu eingerichtet sein, stationär betrieben zu werden. Das Gerät 140 kann dazu verwendet werden, eine Nachricht 145 für eines der Haushaltsgeräte 105, 110 an der externen Stelle zu hinterlegen oder zu erzeugen.

Zur Übermittlung von Nachrichten 145 von der externen Stelle 125 an die ersten Haushaltsgeräte 105 bauen Letztere üblicherweise jeweils eine Kommunikationsverbindung zur externen Stelle 125 auf und erhalten diese zumindest über eine vorbestimmte Zeit hinweg aufrecht. Die externe Stelle 125 kann bei Bedarf eine der Kommunikationsverbindungen benutzen, um die Nachricht 145 an ein vorbestimmtes der Haushaltsgeräte 105, 110 zu übermitteln. Im Kontrast dazu wird vorgeschlagen, dass zunächst nur das zweite Haushaltsgerät 110 eine Kommunikationsverbindung mit der externen Stelle 125 aufrechterhält. Eine Nachricht 145 an eines der Haushaltsgeräte 105, 110 wird an das zweite Haushaltsgerät 110 übermittelt, welches die Nachricht 145, falls erforderlich, an den beabsichtigten Empfänger unter den Haushaltsgeräten 105 weiterleitet.

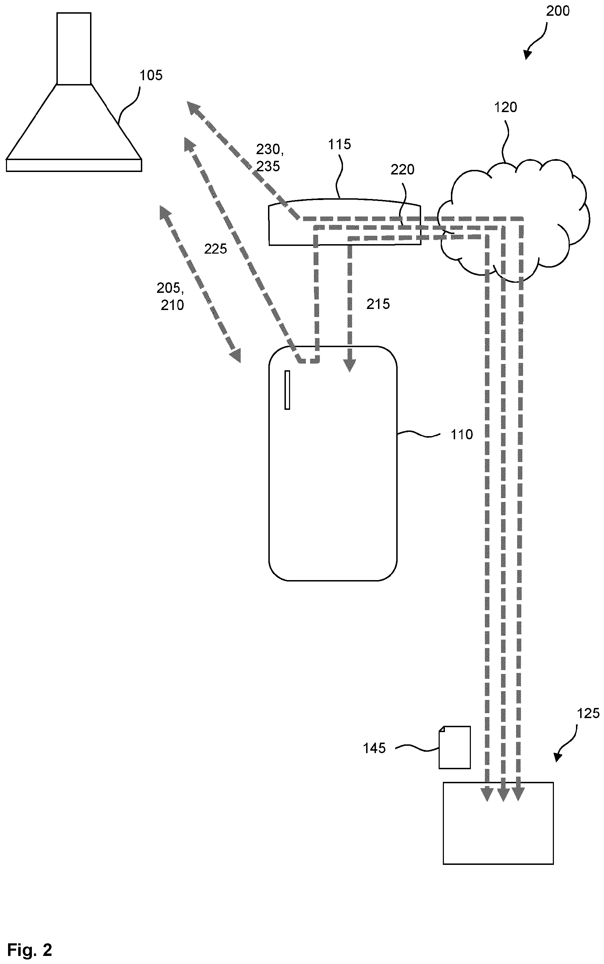

Figur 2 zeigt ein Ablaufdiagramm eines beispielhaften Verfahrens 200 zum Übermitteln einer Nachricht 145 von der externen Stelle 125 an eines der Haushaltsgeräte 105, 110. Zum besseren Verständnis ist dem dargestellten Ablaufdiagramm nur ein Teil des Systems 100 zu Grunde gelegt.

Zunächst können nur erste Haushaltsgeräte 105 vorliegen. In einem Schritt 205 kann unter den Haushaltsgeräten 105 ausgehandelt werden, welches von ihnen die Rolle des zweiten Haushaltsgeräts 110 übernehmen soll. Das zweite Haushaltsgerät 110 kann bevorzugt eine Kommunikationsverbindung mit dem Router 115 und direkte Kommunikationsverbindungen mit möglichst vielen ersten Haushaltsgeräten 105 aufbauen. Gibt es kein Haushaltsgerät 105, das eine direkte Kommunikationsverbindung mit allen anderen Haushaltsgeräten 105 des Haushalts aufbauen kann, so kann die hierin beschriebene Technik mehrfach und unabhängig voneinander mit mehreren unterschiedlichen zweiten Haushaltsgeräten 110 ausgeführt werden. In Figur 2 sind beispielhaft als erstes Haushaltsgerät 105 eine Dunstabzugshaube und als zweites Haushaltsgerät 110 eine Kühlvorrichtung dargestellt.

In einem Schritt 210 stellt das zweite Haushaltsgerät 110 eine Kommunikationsverbindung zum ersten Haushaltsgerät 105 her. Diese Verbindung erfolgt bevorzugt direkt bezüglich einer Transportschicht eines verwendeten Kommunikationsprotokolls. Im Fall einer WLAN-Verbindung kann beispielsweise ein Repeater, der für eine Kommunikation auf einer höheren Schicht nicht sichtbar ist, zwischen die Haushaltsgeräte 105, 110 geschaltet sein.

In einem Schritt 215 stellt das zweite Haushaltsgerät 110 eine Kommunikationsverbindung zur externen Stelle 125 her. Diese Verbindung wird bevorzugt auf der Ebene eines Transportprotokolls einer paketvermittelten Verbindung hergestellt. Eine leitungsvermittelte Verbindung ist ebenfalls möglich. Die Kommunikationsverbindung wird üblicherweise von einer der Seiten 110, 125 geschlossen, wenn die Verbindung über eine erste vorbestimmte Zeit bestanden hat und/oder über eine zweite vorbestimmte Zeit keine Informationen übermittelt wurden. Zur Aufrechterhaltung der Kommunikationsverbindung kann eine der Seiten 110, 125 jeweils vor Ablauf der zweiten vorbestimmten Zeit eine Information übermitteln. Optional kann das zweite Haushaltsgerät 110 dann auch eine Anfrage an die externe Stelle 125 richten, ob eine Nachricht 145 für eines der Haushaltsgeräte 105, 110 vorliegt.

In einem Schritt 220 soll die Nachricht 145 von der externen Stelle 125 an eines der Haushaltsgeräte 105, 110 übermittelt werden. Die externe Stelle 125 übermittelt die Nachricht 145 bevorzugt über die bestehende Kommunikationsverbindung an das zweite Haushaltsgerät 110. Ist die Nachricht 145 an das zweite Haushaltsgerät 110 gerichtet, kann das zweite Haushaltsgerät 110 eine Antwort auf die empfangene Nachricht 145 an die externe Stelle 125 senden, beispielsweise in Form einer Empfangsbestätigung, und das Verfahren 200 kann in diesem Schritt enden. Ist die Nachricht 145 jedoch an das erste Haushaltsgerät 105 gerichtet, so kann sie durch das zweite Haushaltsgerät 110 in einem Schritt 225 dorthin weitergeleitet werden. Das erste Haushaltsgerät 105 kann, eine Antwort auf die empfangene Nachricht 145 an die externe Stelle 125 übermitteln. Die Antwort kann auf umgekehrtem Weg zunächst zum zweiten Haushaltsgerät 110 übermittelt und von dort zur externen Stelle 125 weitergeleitet werden.

In einer weiteren Ausführungsform kann das erste Haushaltsgerät 105 eine Kommunikationsverbindung zum Router 115 herstellen und über diese eine Antwort an die externe Stelle 125 übermitteln. Diese Kommunikationsverbindung verläuft bevorzugt nicht über das zweite Haushaltsgerät 110, sondern direkt zum Router 115 oder, bei Bedarf, über einen anderen Router 115 (nicht dargestellt). In einer Variante umfasst die von der externen Stelle 125 übermittelte Nachricht 145 zunächst nur eine Aufforderung an das Haushaltsgerät 105 zur Herstellung einer direkten Kommunikationsverbindung. In diesem Fall kann sich das erste Haushaltsgerät 105 über die hergestellte Kommunikationsverbindung bei der externen Stelle 125 melden und beispielsweise die tatsächliche Nachricht 145 anfordern. In einem Schritt 235 kann diese von der externen Stelle 125 an das erste Haushaltsgerät 105 übermittelt werden.

Das adressierte Haushaltsgerät 105, 110 kann nach dem Erhalten der Nachricht 145 eine umfasste Steuerinformation entnehmen und auswerten. Die Steuerinformation kann eine Anforderung eines durch das Haushaltsgerät 105, 110 ausführbaren Prozesses umfassen, oder das Bereitstellen oder Ändern eines Steuerparameters. Im Fall der Kühleinrichtung 110 kann der Steuerparameter beispielsweise eine im Inneren herrschende Temperatur betreffen. Auf der Basis der Steuerinformation kann eine Gerätefunktion gesteuert werden, beispielsweise im Fall der Dunstabzugshaube 105 ein Ein- oder Ausschalten eines Lüftermotors oder einer Beleuchtung.

### Bezugszeichen

- 100: System
- 105: erstes Haushaltsgerät
- 105.1: Dunstabzugshaube
- 105.2: Kochfeld
- 105.3: Backofen
- 105.4: Waschmaschine
- 110: zweites Haushaltsgerät (Kühlgerät)
- 115: Router
- 120: übergeordnetes Netzwerk
- 125: externe Stelle
- 130: Verarbeitungseinrichtung
- 135: Speichervorrichtung

- 140: persönliches Gerät
- 145: Nachricht

- 200: Verfahren
- 205: zweites Gerät aushandeln
- 210: erste Kommunikationsverbindung zu erstem Haushaltsgerät herstellen
- 215: zweite Kommunikationsverbindung zur externen Stelle herstellen
- 220: Nachricht an zweites Gerät übermitteln
- 225: Nachricht an erstes Gerät weiterleiten
- 230: dritte Kommunikationsverbindung zur externen Stelle herstellen
- 235: direkte Übermittlung Steuerinformationen

## Patentansprüche

1. Verfahren (200) zum Steuern eines ersten (105) und eines zweiten Haushaltsgeräts (110) in einem Haushalt durch eine externe Stelle (125), wobei das Verfahren (200) folgende Schritte umfasst:
- Bereitstellen von zwei Haushaltsgeräten (105, 110);
- Herstellen (210) einer ersten Kommunikationsverbindung zwischen den beiden Haushaltsgeräten (105, 110);
- Aushandeln zwischen den beiden Haushaltsgeräten, welches als erstes und welches als zweites Haushaltsgerät handelt;
- Herstellen (215) einer zweiten Kommunikationsverbindung vom zweiten Haushaltsgerät (110) zur externen Stelle (125);
- Erfassen (220) einer Nachricht (145) durch das zweite Haushaltsgerät (110), wobei die Nachricht (145) von der externen Stelle (125) an eines der Haushaltsgeräte (105, 110) gerichtet ist;
- Weiterleiten (225) der Nachricht (145) an das erste Haushaltsgerät (105), falls die Nachricht (145) an das erste Haushaltsgerät (105) gerichtet ist.

2. Verfahren (200) nach Anspruch 1, wobei das zweite Haushaltsgerät (110) periodisch Nachrichten (145) von der externen Stelle (125) abfragt.

3. Verfahren (200) nach Anspruch 1 oder 2, wobei das erste Haushaltsgerät (105) in Antwort auf eine empfangene Nachricht (145) eine dritte Kommunikationsverbindung zur externen Stelle (125) herstellt.

4. Verfahren (200) nach Anspruch 3, wobei die dritte Kommunikationsverbindung nicht über das zweite Haushaltsgerät (110) verläuft.

5. Verfahren (200) nach einem der Ansprüche 3 oder 4, wobei eine Nachricht (145), die über die erste Kommunikationsverbindung an das erste Haushaltsgerät (105) weitergeleitet wurde, eine Aufforderung zum Aufbauen der dritten Kommunikationsverbindung betrifft; ferner umfassend das Beziehen (235) einer Steuerinformation durch das erste Haushaltsgerät (105) von der externen Stelle (125).

6. Verfahren (200) nach einem der vorangehenden Ansprüche, wobei eine Gerätefunktion des ersten Haushaltsgeräts (105) in Abhängigkeit einer empfangenen Nachricht (145) gesteuert wird.

7. Verfahren (200) nach einem der vorangehenden Ansprüche, wobei eine Antwort des ersten Haushaltsgeräts (105) auf eine empfangene Nachricht (145) an die externe Stelle (125) übermittelt wird.

8. Verfahren (200) nach einem der vorangehenden Ansprüche, wobei die Nachricht (145) an der externen Stelle (125) auf der Basis einer Anforderung durch ein weiteres Gerät (140) bestimmt ist.

9. Haushaltsgerät (110) zur Steuerung eines weiteren Haushaltsgeräts (105), wobei die Haushaltsgeräte (105, 110) im gleichen Haushalt angeordnet sind und das Haushaltsgerät (110) dazu eingerichtet ist:
- eine erste Kommunikationsverbindung zum weiteren Haushaltsgerät (105) herzustellen;
- mit dem weiteren Haushaltsgerät auszuhandeln, welches der beiden Haushaltsgeräte als erstes und welches als zweites Haushaltsgerät handelt; und
- sofern ausgehandelt wurde, dass das Haushaltsgerät als zweites Haushaltsgerät und das weitere Haushaltsgerät als erstes Haushaltsgerät handelt, eine zweite Kommunikationsverbindung zu einer externen Stelle (125) herzustellen, eine Nachricht (145), die an eines der Haushaltsgeräte (105, 110) gerichtet ist, von der externen Stelle (125) zu erfassen, und die Nachricht (145) an das weitere Haushaltsgerät (105) weiterzuleiten, falls die Nachricht (145) an das weitere Haushaltsgerät (105) gerichtet ist.

10. Externe Stelle (125) zur Steuerung eines ersten und eines zweiten Haushaltsgeräts (110), wobei die externe Stelle dazu eingerichtet ist, eine Nachricht (145), die an eines der Haushaltsgeräte (105, 110) gerichtet ist, zu speichern und die Nachricht (145) in Antwort auf eine Abfrage eines der Haushaltsgeräte (105, 110) bereitzustellen.

11. System (110), umfassend ein Haushaltsgerät (110) nach Anspruch 9, eine externe Stelle (125) nach Anspruch 10 und ein weiteres Haushaltsgerät (105), wobei das weitere Haushaltsgerät (105) dazu eingerichtet ist, eine Nachricht (145) vom Haushaltsgerät (105) zu empfangen und eine Gerätefunktion in Abhängigkeit der Nachricht (145) zu steuern.

## Claims

1. Method (200) for controlling a first (105) and a second household appliance (110) in a household by means of an external location (125), wherein the method (200) comprises the following steps:
- providing two household appliances (105, 110);
- establishing (210) a first communication link between the two household appliances (105, 110);
- negotiating between the two household appliances to determine which acts as a first and which acts as a second household appliance;
- establishing (215) a second communication link between the second household appliance (110) and the external location (125);
- acquiring (220) a message (145) by means of the second household appliance (110), wherein the message (145) is directed from the external location (125) to one of the household appliances (105, 110);
- forwarding (225) the message (145) to the first household appliance (105) if the message (145) is directed at the first household appliance (105).

2. Method (200) according to claim 1, wherein the second household appliance (110) periodically requests messages (145) from the external location (125).

3. Method (200) according to claim 1 or 2, wherein in response to a received message (145) the first household appliance (105) establishes a third communication link with the external location (125).

4. Method (200) according to claim 3, wherein the third communication link does not run via the second household appliance (110).

5. Method (200) according to one of claims 3 or 4, wherein a message (145), which was forwarded via the first communication link to the first household appliance (105), relates to a request to set up the third communication link; further comprising obtaining (235) an item of control information by means of the first household appliance (105) from the external location (125).

6. Method (200) according to one of the preceding claims, wherein an appliance function of the first household appliance (105) is controlled as a function of a received message (145).

7. Method (200) according to one of the preceding claims, wherein a response of the first household appliance (105) to a received message (145) is transferred to the external location (125).

8. Method (200) according to one of the preceding claims, wherein the message (145) is determined at the external location (125) on the basis of a request by means of a further appliance (140).

9. Household appliance (110) for controlling a further household appliance (105), wherein the household appliances (105, 110) are arranged in the same household and the household appliance (110) is designed:
- to establish a first communication link with the further household appliance (105);
- to negotiate with the further household appliance to determine which of the two household appliances acts as the first and which acts as the second household appliance; and
- if it was negotiated that the household appliance is a second household appliance and the further household appliance is the first household appliance, to establish a second communication link with an external location (125), to acquire a message (145), which is directed at one of the household appliances (105, 110), from the external location (125) and to forward the message (145) to the further household appliance (105) if the message (145) is directed at the further household appliance (105).

10. External location (125) for controlling a first and a second household appliance (110), wherein the external location is designed to store a message (145), which is directed at one of the household appliances (105, 110), and to provide the message (145) in response to a request from one of the household appliances (105, 110).

11. System (110) comprising a household appliance (110) according to claim 9, an external location (125) according to claim 10 and a further household appliance (105), wherein the further household appliance (105) is designed to receive a message (145) from the household appliance (105) and to control an appliance function depending on the message (145).

## Revendications

1. Procédé (200) destiné à commander un premier (105) et un deuxième appareil électroménager (110) dans un seul ménage par un poste externe (125), le procédé (200) comprenant les étapes suivantes :
- fourniture de deux appareils électroménagers (105, 110) ;
- établissement (210) d'une première liaison de communication entre les deux appareils électroménagers (105, 110) ;
- échange entre les deux appareils électroménagers, qui désigne l'un en tant que premier et l'autre en tant que deuxième appareil électroménager ;
- établissement (215) d'une deuxième liaison de communication du deuxième appareil électroménager (110) avec le poste externe (125) ;
- saisie (220) d'un message (145) par l'intermédiaire du deuxième appareil électroménager (110), le message (145) étant adressé du poste externe (125) à l'un des appareils électroménagers (105, 110) ;
- transmission (225) du message (145) au premier appareil électroménager (105), si le message (145) est adressé au premier appareil électroménager (105).

2. Procédé (200) selon la revendication 1, dans lequel le deuxième appareil électroménager (110) envoie périodiquement des messages (145) interrogatifs du poste externe (125).

3. Procédé (200) selon la revendication 1 ou 2, dans lequel le premier appareil électroménager (105) établit, en réponse à un message (145) reçu, une troisième liaison de communication avec le poste externe (125).

4. Procédé (200) selon la revendication 3, dans lequel la troisième liaison de communication ne passe pas par le deuxième appareil électroménager (110).

5. Procédé (200) selon l'une des revendications 3 ou 4, dans lequel un message (145), transmis par la première liaison de communication au premier appareil électroménager (105), concerne une demande de constitution de la troisième liaison de communication ; comprenant en outre la référence (235) d'une information de commande par le premier appareil électroménager (105) du poste externe (125).

6. Procédé (200) selon l'une des revendications précédentes, dans lequel une fonction d'appareil du premier appareil électroménager (105) est commandée en fonction d'un message reçu (145).

7. Procédé (200) selon l'une des revendications précédentes, dans lequel une réponse du premier appareil électroménager (105) à un message (145) reçu est retransmis au poste externe (125).

8. Procédé (200) selon l'une des revendications précédentes, dans lequel le message (145) au poste externe (125) est déterminé sur base d'une demande par un autre appareil (140).

9. Appareil électroménager (110) destiné à commander un autre appareil électroménager (105), dans lequel les appareils électroménagers (105, 110) se trouvent dans le même ménage et l'appareil électroménager (110) est conçu pour :
- établir une première liaison de communication avec l'autre appareil électroménager (105) ;
- échanger avec l'autre appareil électroménager, lequel des deux appareils électroménagers est désigné l'un premier et l'autre deuxième appareil électroménager ; et
- pour autant qu'il y ait eu échange à ce sujet, que tel appareil électroménager est désigné deuxième appareil électroménager et que l'autre appareil électroménager est désigné premier appareil électroménager, établir une deuxième liaison de communication avec un poste externe (125), saisir un message (145), adressé à l'un des appareils électroménagers (105, 110), du poste externe (125), et transmettre le message (145) à l'autre appareil électroménager (105), si le message (145) est adressé à l'autre appareil électroménager (105).

10. Poste externe (125) destiné à commander un premier et un deuxième appareil électroménager (110), dans lequel le poste externe est conçu pour mettre en mémoire un message (145) adressé à l'un des appareils électroménagers (105, 110) et à fournir le message (145) en réponse à une demande interrogative d'un des appareils électroménagers (105, 110).

11. Système (110), comprenant un appareil électroménager (110) selon la revendication 9, un poste externe (125) selon la revendication 10 et un autre appareil électroménager (105), dans lequel l'autre appareil électroménager (105) est conçu pour recevoir un message (145) de l'appareil électroménager (105) et à commander une fonction d'appareil en fonction du message (145).
